# EUROPÄISCHE PATENTSCHRIFT

(11) **EP 3 605 784 B1**
(45) Veröffentlichungstag und Bekanntmachung des Hinweises auf die Patenterteilung: **29.03.2023**
(21) Anmeldenummer: 19189167.0
(22) Anmeldetag: 30.07.2019
(51) Int. Cl.: H02J 7/00

(54) **TRAGVORRICHTUNG MIT ENERGIESPEICHER UND ELEKTRISCHEM UMFORMER**
SUPPORTING DEVICE WITH ENERGY ACCUMULATOR AND ELECTRIC CONVERTER
DISPOSITIF DE TRANSPORT POURVU D'ACCUMULATEUR D'ÉNERGIE ET DE TRANSDUCTEUR ÉLECTRIQUE

(30) Priorität: 31.07.2018 DE 102018118552
(43) Veröffentlichungstag der Anmeldung: 05.02.2020
(73) Patentinhaber: Wacker Neuson Produktion GmbH & Co. KG, 85084 Reichertshofen (DE)
(72) Erfinder: Berger, Rudolf, 82031 Grünwald (DE); Steffen, Michael, 80796 München (DE); Glanz, Christian, 85221 Dachau (DE); Diller, Patrick, 85107 Baar-Ebenhausen (DE)
(74) Vertreter: Müller Hoffmann & Partner

(56) Entgegenhaltungen:
- CN-A- 106 836 819
- DE-A1- 4 301 508
- DE-A1-102015 217 180
- DE-U1-202013 102 928
- US-A- 4 876 490
- US-A- 5 929 597

## Beschreibung

Die Erfindung betrifft eine Tragvorrichtung mit einem Energiespeicher und einem elektrischen Umformer. Insbesondere betrifft die Erfindung einen portablen Energiespeicher für Elektrowerkzeuge bzw. für elektrisch betriebene Arbeitsmaschinen.

Es sind Akku-Rucksacksysteme bekannt, die sowohl als Wechselsystem (zum Auswechseln der Akkus) als auch als Systeme mit fest verbautem Akku verfügbar sind. Der Akku bzw. die wiederaufladbare Batterie dient dabei als Energiequelle bzw. Energiespeicher für einen Verbraucher. Als elektrischer Ausgang dieser Systeme wird die Gleichspannung des Akkus zur Verfügung gestellt, die dann an einem angeschlossenen Arbeitsgerät entweder direkt auf einen Antriebsmotor geschaltet wird oder einem Zwischenkreis eines nachfolgenden Frequenzumformers zugeführt wird, welcher dann einen Drehstrommotor im Arbeitsgerät antreibt.

Derartige Systeme sind beispielsweise aus der DE 43 01 508 A1, DE 20 2012 013 284 A1 und der DE 20 2013 102 928 A1 bekannt.

Gerade im Baustellenbereich werden häufig Arbeitsgeräte mit mehrphasigen Antriebsmotoren eingesetzt. Für diese Motoren ist der am elektrischen Ausgang des Akkus anliegende Gleichstrom jedoch nicht geeignet. Dadurch muss an dem Arbeitsgerät ein zusätzlicher Frequenzumformer vorgesehen werden, was zu einem erhöhten Bauaufwand, erhöhten Kosten und - sofern der Frequenzumformer direkt an dem Arbeitsgerät angebracht ist - zu einem erhöhten Gewicht des Arbeitsgeräts führt.

Aus der CN 106 836 819 A ist ein Innenrüttler zur Betonverdichtung bekannt, mit einem von Hand zu haltenden Antriebsmotor und einer von dem Antriebsmotor über eine biegsame Welle antreibbaren Rüttelflasche. Der Antriebsmotor ist durch einen an dem Motorgehäuse angebrachten Akku mit elektrischer Energie versorgbar.

In der US 5 929 597 A ist ein Rucksacksystem beschrieben, bei dem ein Akku mithilfe einer Gurtvorrichtung durch einen Benutzer am Rücken getragen werden kann. Von dem Akku wird ein Anschlusskabel weggeführt, an dessen Ende ein Adapter zum Anschließen eines Elektrowerkzeugs angeordnet ist.

Ein ähnliches System ist in der US 4 876 490 A beschrieben.

Aus der DE 10 2015 217 180 A1 ist eine tragbare Energiespeichervorrichtung zur Versorgung von Werkzeugen bekannt, an der Anschlüsse zum Anschließen von zwei Werkzeugeinrichtungen vorgesehen sind. Eine Synchronisierungseinrichtung kann ein angeschlossenes Werkzeug erkennen, um das Werkzeug mit bestimmten und bevorzugt voreingestellten Parametern zu betreiben.

Der Erfindung liegt die Aufgabe zugrunde, den somit beim Stand der Technik bestehenden Aufwand zu vermeiden bzw. zu verringern.

Die Aufgabe wird erfindungsgemäß durch eine Tragvorrichtung mit den Merkmalen von Anspruch 1 gelöst. Vorteilhafte Ausgestaltungen sind in den abhängigen Ansprüchen definiert.

Es wird eine Tragvorrichtung angegeben, mit einem Tragrahmen, einem von dem Tragrahmen getragenen Energiespeicher, einer von dem Tragrahmen getragenen Umformereinrichtung zum Umformen eines von dem Energiespeicher bezogenen elektrischen Stroms und mit einer von dem Tragrahmen getragenen elektrischen Anschlusseinrichtung zum Anschließen eines Verbrauchers.

Der einen wesentlichen Bestandteil der Tragvorrichtung darstellende Tragrahmen kann in beliebiger Weise ausgeführt werden, zum Beispiel auch als Tragplatte, Traggestell o.ä.

Bei dem von dem Tragrahmen getragenen Energiespeicher kann es sich insbesondere um einen an sich bekannten wiederaufladbaren Akku, als eine wiederaufladbare elektrische Batterie, handeln. Von dem Tragrahmen wird weiterhin die Umformereinrichtung zum Umformen eines von dem Energiespeicher bezogenen elektrischen Stroms getragen. Der Energiespeicher liefert dabei insbesondere einen Gleichstrom, der durch den Umformer in geeigneter Weise bezüglich der Spannung und/oder der Frequenz umgeformt werden kann. Vor allem zum Ansteuern eines Drehstrommotors eines an die Tragvorrichtung anschließbaren Arbeitsgeräts (Verbraucher) ist es erforderlich, den Strom mit einer geeigneten Charakteristik an das Arbeitsgerät zu führen.

Typischerweise handelt es sich bei der Umformereinrichtung um einen an sich bekannten Frequenzumformer, der sowohl die Spannung als auch die Frequenz des von dem Energiespeicher gelieferten Gleichstroms wandeln kann, wodurch ein Wechselstrom mit höherer oder niedrigerer Spannung und geänderter Frequenz erzeugbar ist. Die Umformereinrichtung ist dabei mit dem Energiespeicher elektrisch verbunden.

Aus dem vom Energiespeicher kommenden Gleichstrom kann somit ein ein- oder mehrphasiger Strom mit Sonderfrequenz und/oder Sonderspannung erzeugt werden. Die Umformereinrichtung ist daher Teil der Tragvorrichtung.

Unter einer Umformereinrichtung ist ein Bauelement zu verstehen, das Gleichstrom in einen Strom mit einer Frequenz größer Null umwandelt, also in einen Wechselstrom.

Schließlich wird von dem Tragrahmen auch noch die elektrische Anschlusseinrichtung zum Anschließen des Verbrauchers getragen. Bei dem Verbraucher handelt es sich insbesondere um ein Arbeitsgerät wie zum Beispiel ein Elektrowerkzeug, einen Innenrüttler zur Betonverdichtung etc. Die Anschlusseinrichtung kann zum Beispiel in der Art einer Steckdose oder Anschlussbuchse ausgeführt werden. Dabei können die Anschlusskontakte bedarfsweise unter einer öffenbaren Klappe verborgen sein, um sie bei Nichtgebrauch vor äußeren Einwirkungen zu schützen. Das Arbeitsgerät kann mithilfe eines geeigneten Steckkontaktes (z. B. eines Steckers) in die Anschlusseinrichtung (z. B. die Steckdose) angeschlossen werden.

Die Anschlusseinrichtung kann eine oder auch mehrere Möglichkeiten zum Anschließen von einem oder auch mehreren Verbrauchern aufweisen.

Der Energiespeicher, die Umformereinrichtung und die Anschlusseinrichtung können alle vom Tragrahmen getragen werden, wobei zur Erreichung dieses Zwecks auch Zwischenelemente, Befestigungseinrichtungen oder -elemente, Halteeinrichtungen, Aufnahmen etc. zum eigentlichen Befestigen dieser Komponenten an den Tragrahmen vorgesehen sein können. Es ist somit nicht zwingend erforderlich, dass der Energiespeicher unmittelbar auf dem Tragrahmen befestigt ist. Vielmehr kann er - wie auch die anderen Komponenten - in geeigneter Weise durch eine Befestigungseinrichtung mit dem Tragrahmen mechanisch gekoppelt sein.

Der Energiespeicher kann insbesondere wechselbar an dem Tragrahmen befestigt sein. Er ist dann einfach lösbar, gegebenenfalls ohne Zuhilfenahme weiterer Werkzeuge. Zum Beispiel kann er durch Betätigen einer Verriegelungseinrichtung, z.B. eines Riegels, durch einen Benutzer von dem Tragrahmen abgenommen und durch einen weiteren Energiespeicher ersetzt werden. Um einen zuverlässigen elektrischen Kontakt zwischen dem Energiespeicher und der dafür vorgesehenen Aufnahme sicherzustellen, kann es zweckmäßig sein, die Befestigung des Energiespeichers an dem Tragrahmen im Wege einer Einsteckbewegung durchzuführen.

Die Einsteckbewegung kann z.B. von oben bzw. eine entsprechend entgegen gerichtete Aussteckbewegung nach oben erfolgen. In diesem Fall kann der Energiespeicher mit seinem gesamten Gewicht in der Aufnahme zuverlässig gehalten werden. Das Wechseln des Energiespeichers erfolgt nach oben über eine obere Öffnung der Aufnahme.

Der Energiespeicher und die Umformereinrichtung können eine bauliche Einheit bilden und zum Beispiel gemeinsam wechselbar an dem Tragrahmen befestigt sein. Die bauliche Einheit kann ihrerseits bei einer Variante ohne Werkzeug auflösbar sein, z.B. nach dem Ausbau aus dem Tragrahmen. Ebenso ist es aber auch möglich, dass die bauliche Einheit derart gestaltet ist, dass eine Auflösung und damit Trennung des Energiespeichers und der Umformereinrichtung nur mit einem Werkzeug, ggfs. nur durch einen Fachmann erfolgen kann.

Die Tragvorrichtung kann als Schultertasche bzw. als Rucksack ausgebildet sein, mit wenigstens einem als Schultergurt dienenden Gurt zum Tragen der Tragvorrichtung über einer Schulter eines Benutzers. Der Gurt kann damit als Tragriemen ausgebildet sein, so dass der Bediener die Tragvorrichtung bequem auf seiner Schulter tragen kann, wodurch er von schweren Tragarbeiten befreit ist. Die derart ausgebildete Tragvorrichtung bildet somit ein Akku-Rucksacksystem mit Frequenzumformer, wobei - wie weiter unten erläutert wird - auch noch ein zweiter Gurt vorgesehen kann, um den Tragekomfort zu erhöhen. Der Schultergurt kann auch als formstabiler Bügel gestaltet sein, der über der Schulter getragen wird.

Der Gurt kann an wenigstens zwei Befestigungspunkten an dem Tragrahmen befestigt sein, um ein sicheres Tragen des Tragrahmens zu ermöglichen.

Bei einer Variante sind zwei Gurte vorgesehen, zum Tragen der Tragvorrichtung über beiden Schultern eines Benutzers. In diesem Fall ist die Tragvorrichtung wie ein Rucksack ausgestaltet. Die beiden Gurte sind mit ihren Enden jeweils an Befestigungspunkten an dem Tragrahmen befestigt, nämlich im oberen Bereich des Tragrahmens und im unteren Bereich des Tragrahmens. Der Benutzer kann die beiden Gurte über seine beiden Schultern ziehen und die Tragvorrichtung damit bequem auf seinem Rücken tragen. Es kann zweckmäßig sein, an den Gurten oder auch an der dem Benutzer zugewandten Seite des Tragrahmens entsprechende Polsterungen vorzusehen, um dem Benutzer ein möglichst bequemes Tragen der Tragvorrichtung zu ermöglichen.

Bei der rucksackartigen Gestaltung der Tragvorrichtung kann es zweckmäßig sein, wenn die Komponenten Energiespeicher, Umformereinrichtung und/oder Anschlusseinrichtung auf der Rückseite des Tragrahmens, d.h. auf der vom Benutzer abgewandten Seite des Tragrahmens gehalten werden.

Zudem kann ein mit dem Tragrahmen verbundener Hüftgurt (auch als Beckengurt bezeichnet) vorgesehen sein, um den Tragekomfort zu verbessern. Wie bei Wanderrucksäcken üblich, wird mit Hilfe des Hüftgurts ein großer Teil des Rucksackgewichts (hier: des Gewichts der gesamten Tragvorrichtung) auf der Hüfte des Benutzers abgestützt, wodurch der Rücken und die Schultern entlastet werden. Angesichts des erheblichen Gewichts des Energiespeichers und des Umformers ist es somit ebenfalls vorteilhaft, wenn ein Teil des Gewichts über den Hüftgurt direkt auf der Hüfte des Benutzers abgestützt wird.

Bei einer Variante kann entweder der Energiespeicher oder die Umformereinrichtung an dem Hüftgurt und damit an dem Tragrahmen befestigt sein. Bei dieser Variante wird zwar nach wie vor dieser jeweilige Energiespeicher oder die Umformereinrichtung von dem Tragrahmen getragen. Jedoch kann die Gewichtskraft der Komponente dabei auch direkt auf der Hüfte des Benutzers abgestützt werden. Auf dem Tragrahmen, insbesondere auf der Rückseite bzw. vom Benutzer abgewandten Seite des Tragrahmens verbleibt dann die jeweils andere Komponente.

Der Hüftgurt erstreckt sich dabei im Wesentlichen horizontal vom Tragrahmen und ist vorzugsweise im unteren Bereich des Tragrahmens an jeweiligen Befestigungspunkten befestigt. Der Hüftgurt kann dabei auch zweigeteilt sein und insbesondere eine linke Gurthälfte für die linke Hüftseite und einen rechten Teil für die rechte Gurthälfte des Benutzers sein. Die beiden Gurthälften können bedarfsweise vom Benutzer vor seinem Bauch mithilfe eines geeigneten Gurtschlosses miteinander verschlossen werden. Der Hüftgurt auch sehr steif, z.B. in der Art einer Hüftstütze - ggfs. auch hier in zwei Teile aufgeteilt - ausgebildet sein, so dass sich die Hüftstütze bzw. die beiden Stützenteile auf der Hüfte des Benutzers abstützen können.

Bei einer Variante kann eine von dem Tragrahmen getragene Schalteinrichtung vorgesehen sein, zum Schalten einer elektrischen Verbindung zwischen dem Energiespeicher und der Umformereinrichtung. Die Schalteinrichtung ist damit insbesondere in der Lage, die elektrische Verbindung herzustellen ("An") oder zu unterbrechen ("Aus"). Dabei ist es möglich, dass die Schalteinrichtung vom Bediener manuell betätigt wird, zum Beispiel durch Bedienen eines Schalters oder eines Tasters. Ebenso ist alternativ oder ergänzend ein automatisches Schalten möglich, wie nachfolgend noch erläutert wird.

Bei einer Ausführungsform kann an der Anschlusseinrichtung eine Detektionseinrichtung vorgesehen sein, zum Erkennen, dass ein Verbraucher (zum Beispiel ein Arbeitsgerät) angeschlossen ist, wobei die Detektionseinrichtung mit der Schalteinrichtung gekoppelt sein kann, derart, dass die Schalteinrichtung nur dann schließbar ist, wenn ein an der Anschlusseinrichtung angeschlossener Verbraucher erkannt wird. Somit kann insbesondere durch die Detektionseinrichtung das Vorhandensein, gegebenenfalls auch der Typ oder die Art des angeschlossenen Verbrauchers erkannt werden.

Die Detektionseinrichtung kann zum Beispiel als eine Art Sensor ausgebildet sein, der erkennt, dass ein Stecker des Verbrauchers in die Anschlusseinrichtung (zum Beispiel eine Steckdose) eingesteckt ist. Nur in diesem Fall kann die Schalteinrichtung geschlossen werden, um die elektrische Verbindung zwischen dem Energiespeicher und der Umformereinrichtung zu bilden.

Wenn die Detektionseinrichtung auch noch den Typ des Verbrauchers erkennen kann, kann zum Beispiel sichergestellt werden, dass die Schalteinrichtung nur dann geschlossen wird, wenn der bestimmungsgemäß vorgesehene Verbraucher an der Anschlusseinrichtung angeschlossen ist. Wird hingegen ein nicht geeigneter Verbraucher angeschlossen, bleibt die Schalteinrichtung gesperrt, so dass eine versehentliche Bestromung des Verbrauchers ausgeschlossen ist.

Dabei kann insbesondere die Schalteinrichtung automatisch schließbar sein, wenn der an der Anschlusseinrichtung angeschlossene Verbraucher als bestimmungsgemäß erkannt wird.

Bei sämtlichen Varianten kann eine Schalteinrichtung vorgesehen sein, die dazu eingerichtet ist, die Stromversorgung zwischen dem Energiespeicher und der Anschlusseinrichtung wählbar zu schalten. Hierzu kann die Schalteinrichtung beispielsweise einen Stromfluss zwischen dem mindestens einen Energiespeicher und der Umformereinrichtung wählbar herstellen und/oder unterbrechen. Ferner kann die Schalteinrichtung alternativ einen Stromfluss zwischen der Umformereinrichtung und der Anschlusseinrichtung herstellen und/oder unterbrechen. Ferner kann die Schalteinrichtung auch innerhalb des Energiespeichers angeordnet sein, so dass die Anschlüsse des Energiespeichers bei einem Wechsel stromlos geschaltet sein können und damit keine Gefahr für einen Benutzer besteht.

Der Verbraucher selbst, also zum Beispiel das Arbeitsgerät, kann seinerseits ebenfalls noch einen Netzschalter aufweisen, damit der Bediener das Gerät wahlweise ein- und ausschalten kann. In diesem Fall dient die Schalteinrichtung an der Tragvorrichtung somit nicht dem Ein- und Ausschalten des Arbeitsgeräts, sondern allein der sicheren Bestromung bzw. Stromlosschaltung der Anschlusseinrichtung.

Es sind weitere Varianten möglich, bei denen von dem Tragrahmen wenigstens eine der folgenden weiteren Komponenten getragen wird:
So kann eine Ladeeinrichtung für den Energiespeicher vorgesehen sein, um den Energiespeicher zum Beispiel an einem öffentlichen Netz aufzuladen, insbesondere bei temporärer Nichtbenutzung der Tragvorrichtung.

Diese Ladeeinrichtung kann zum Beispiel auch als Photovoltaikeinrichtung (Solarzellen) ausgebildet sein, um ein Laden des Energiespeichers sogar während des Betriebs zu ermöglichen.

Auch kann eine Heizeinrichtung zum Bereitstellen von Wärme für den Benutzer an dem Tragrahmen befestigt sein. Die Heizeinrichtung kann zum Beispiel ein Warmluftgebläse sein. Ebenso kann die Heizeinrichtung aber auch Heizelemente aufweisen, die vom Bediener am Körper bzw. in der Kleidung getragen werden ("Taschenofen", Rückenwärmer, Schuhwärmer, Handschuhwärmer etc.).

Denkbar ist auch das Vorsehen einer Kühleinrichtung zum Bereitstellen von Kälte bzw. einer Kühlwirkung für den Benutzer. Hierbei kann es sich um ein Kühlaggregat oder um einen Ventilator etc. handeln.

Auch möglich ist eine Beleuchtungseinrichtung, um eine punktuelle oder flächige Beleuchtung des Arbeitsbereichs zu ermöglichen. Des Weiteren kann auch eine Kleinspannungs-Anschlussvorrichtung (USB-Anschluss, Power-Bank, 5 V-Handylader) vorgesehen sein.

Die genannten Komponenten können alle durch den Energiespeicher gespeist werden, so dass es nicht erforderlich ist, einen eigenen Akku vorzuhalten.

Diese und weitere Vorteile und Merkmale der Erfindung werden nachfolgend anhand von Beispielen unter Zuhilfenahme der begleitenden Figuren näher erläutert. Es zeigen:
- **Fig. 1**: in schematischer Seitenansicht eine als Rucksack ausgebildete Tragvorrichtung mit einem Energiespeicher und einer Umformereinrichtung;
- **Fig. 2 bis 5**: verschiedene Varianten der Tragvorrichtung von Fig. 1, ebenfalls in Seitenansicht.

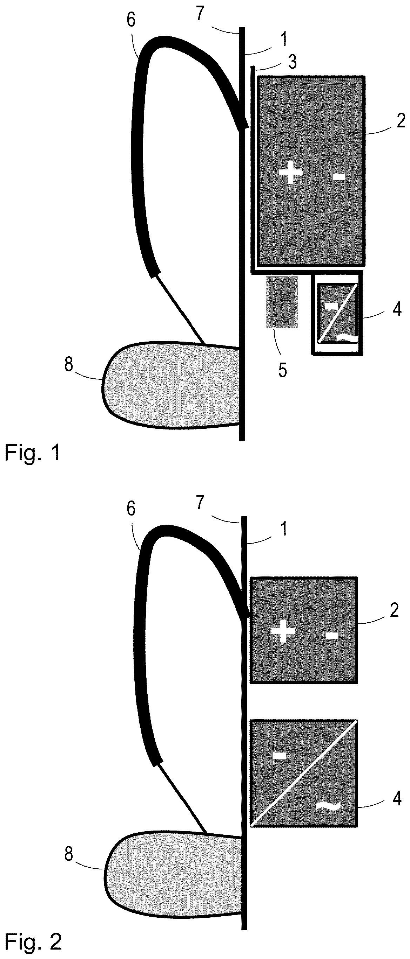

Fig. 1 zeigt in schematischer Seitenansicht eine in der Art eines Rucksacks gestaltete Tragvorrichtung mit einem Tragrahmen 1, der zum Beispiel als Tragplatte oder Traggestell gestaltet sein kann.

Auf der vom Bediener abgewandten Rückseite des Tragrahmens 1 ist ein als Energiespeicher dienender Akku 2 befestigt. Der Akku 2 kann in einer eigens dafür vorgesehenen, als Befestigungseinrichtung dienenden Akkuaufnahme 3 aufgenommen und damit an dem Tragrahmen 1 befestigt sein. Die Akkuaufnahme 3 kann zum Beispiel als Einführschlitz bzw. Einführschacht oder als Akkugehäuse ausgebildet sein, in die der Akku 2 wechselbar von oben eingesteckt wird. Wenn der Akku 2 entleert ist, kann er aus der Akkuaufnahme 3 entfernt und durch einen frischen Akku 2 ersetzt werden.

Der Akku 2 kann mithilfe einer nicht dargestellten Verriegelungseinrichtung in der Akkuaufnahme 3 gehalten werden, so dass er in jeder Lage des Tragrahmens 1 zuverlässig gehalten wird. Die Verriegelungseinrichtung kann dazu z.B. einen Riegel, eine Klappe, einen Zapfen o.ä. aufweisen, um den Akku 2 insbesondere formschlüssig zu halten.

Weiterhin wird von dem Tragrahmen 1 ein als Umformereinrichtung dienender Frequenzumformer 4 getragen. Auch der Frequenzumformer 4 kann in einem eigenen Gehäuse untergebracht sein, das über eine Befestigungseinrichtung an dem Tragrahmen 1 befestigt ist. Dabei ist es möglich, den Frequenzumformer 4 fest oder wechselbar an dem Tragrahmen 1 zu befestigen.

Weiterhin ist an dem Tragrahmen 1 eine als Anschlusseinrichtung dienende Steckdose 5 angebracht. Bei der Steckdose 5 kann es sich um eine CEE-Steckdose handeln, an der ein entsprechendes, in Fig. 1 nicht gezeigtes Arbeitsgerät, wie z.B. ein Innenrüttler zur Betonverdichtung, angeschlossen werden kann. Insbesondere wird das Arbeitsgerät mit seinem ebenfalls in Fig. 1 nicht dargestellten Stecker in die Steckdose 5 eingesteckt und auf diese Weise mit dem vom Frequenzumformer 4 bereitgestellten Wechselstrom in der geeigneten Frequenz versorgt.

An dem Tragrahmen 1 sind zwei Traggurte 6 befestigt, von denen in der Seitenansicht von Fig. 1 nur einer sichtbar ist. Der zweite Traggurt 6 befindet sich in der Zeichenebene dahinter. Die beiden Traggurte 6 können ähnlich wie die Traggurte an einem typischen Wanderrucksack ausgestaltet sein und zum Beispiel eine Polsterung aufweisen, um dem Bediener ein komfortables Tragen auf seinen beiden Schultern zu ermöglichen. Die Traggurte 6 sind mit ihren jeweiligen Enden an der Oberseite und an der Unterseite des Tragrahmens 1 befestigt.

Am oberen Ende des Tragrahmens 1 kann ein Traggriff 7 vorgesehen sein, um dem Benutzer das Tragen der Tragvorrichtung mit der Hand zu erleichtern.

An der Unterseite des Tragrahmens 1 ist ein Hüftgurt 8 angebracht. Auch der Hüftgurt 8 kann in ähnlicher Weise wie bei einem Wanderrucksack gestaltet sein, um dem Bediener einen vergleichbaren Komfort zu bieten. Insbesondere ist der Hüftgurt 8 geeignet, um einen erheblichen Teil des gesamten Gewichts auf der Hüfte des Bedieners abzustützen. Dadurch werden Rücken und Schultern des Bedieners entlastet.

Der Hüftgurt 8 ist zweigeteilt und weist eine linke und eine rechte Gurthälfte auf, wobei in Fig. 1 lediglich die linke Gurthälfte sichtbar ist. Die beiden Gurthälften können durch ein übliches Gurtschloss vor dem Bauch des Bedieners zu einem umlaufenden Gurt geschlossen werden.

Der Hüftgurt 8 kann auch als einfache Hüftstütze, z.B. in der Form einer Halbschale ausgebildet sein, also nicht als umlaufender Gurt. Es ist dabei auch möglich, lediglich zwei Stützflächen durch den Hüftgurt 8 bereitzustellen, über die eine gewisse Stützwirkung auf der Hüfte des Bedieners möglich wird.

Fig. 2 zeigt eine Variante der Anordnung von Fig. 1. Hier sind der Akku 2 und der Frequenzumformer 4 getrennt voneinander an der Tragplatte 1 befestigt. Die Steckdose 5 ist zur Vereinfachung nicht dargestellt.

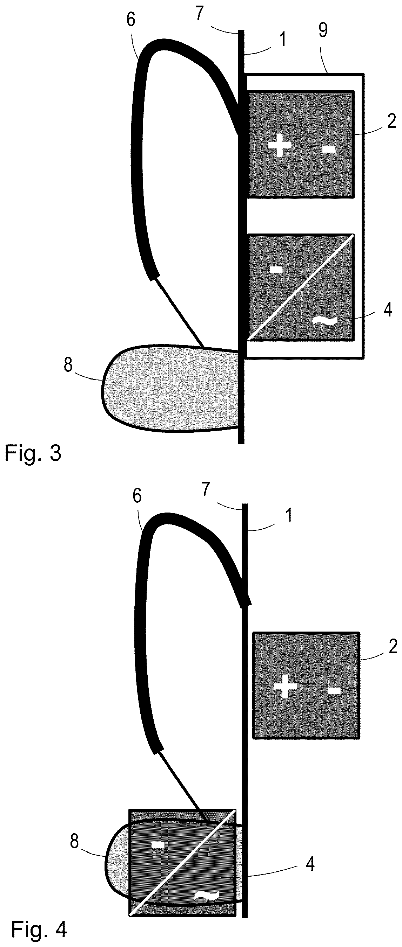

In Fig. 3 wird eine weitere Variante gezeigt, bei der der Akku 2 und der Frequenzumformer 4 einen bauliche Einheit 9 bilden. Die gesamte Einheit 9 kann von dem Tragrahmen 1 abgenommen und dort auch wieder befestigt werden. Damit ist ein gleichzeitiges Wechseln des Akkus 2 und des Frequenzumformers 4 möglich.

In Fig. 4 wird eine weitere Variante gezeigt, bei der der Akku 2 von dem Tragrahmen 1 getragen wird. Der Frequenzumformer 4 ist an dem Hüftgurt 8 befestigt und wird über diesen von dem Tragrahmen 1 getragen.

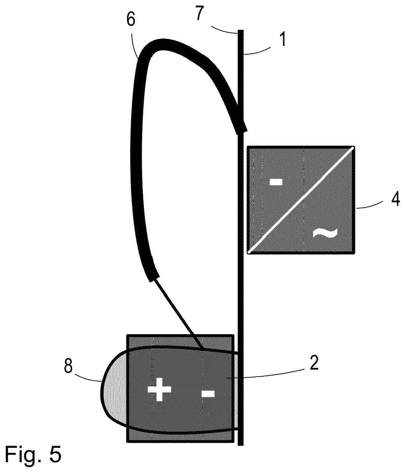

Fig. 5 zeigt eine nicht zur Erfindung gehörende Umkehrung des Aufbaus von Fig. 4. Hier ist der Frequenzumformer 4 auf der Rückseite des Tragrahmens 1 angebracht, während der Akku 2 an dem Hüftgurt 8 befestigt und von diesem an dem Tragrahmen 1 gehalten wird. Dabei ist es auch möglich, dass zwei Akkus 2 vorgesehen werden, die an dem linken und an dem rechten Teil des Hüftgurts 8 angebracht sind. Selbstverständlich können auch mehrere Einheiten von Akkus 2 der Tragvorrichtung verteilt getragen werden, so auch zusätzlich zu den Akkus von Fig. 5 z. B. auf der Rückseite des Tragrahmens 1.

So ist bei einer weiteren, in den Figuren nicht gezeigten Variante eine Kombination der Anordnung der Fig. 2 und 5 möglich, bei der drei (oder mehr) Akkus 2 verbaut sind, nämlich sowohl auf der Rückseite des Tragrahmens 1 als auch an den Hüftgurten 8.

Bei sämtlichen Varianten kann eine in den Figuren nicht gezeigte Schalteinrichtung vorgesehen sein, die dazu eingerichtet ist, die Stromversorgung zwischen dem Akku 2 und der Anschlusseinrichtung 5 wählbar zu schalten. Hierzu kann die Schalteinrichtung beispielsweise einen Stromfluss zwischen dem mindestens einen Akku 2 und dem Frequenzumformer 4 wählbar herstellen und/oder unterbrechen. Ferner kann die Schalteinrichtung alternativ einen Stromfluss zwischen dem Frequenzumformer 4 und der Anschlusseinrichtung 5 herstellen und/oder unterbrechen. Ferner kann die Schalteinrichtung auch innerhalb des Akkus 2 angeordnet sein, so dass die Anschlüsse des Akkus 2 bei einem Wechsel stromlos geschaltet sein können und damit keine Gefahr für einen Benutzer besteht.

## Patentansprüche

1. Tragvorrichtung, mit
- einem Tragrahmen (1);
- einem von dem Tragrahmen (1) getragenen Energiespeicher (2);
- einer von dem Tragrahmen (1) getragenen Umformereinrichtung (4) zum Umformen eines von dem Energiespeicher (2) bezogenen elektrischen Stroms; und mit
- einer von dem Tragrahmen (1) getragenen elektrischen Anschlusseinrichtung (5) zum Anschließen eines Verbrauchers;
wobei
- der Tragrahmen (1) als Tragplatte oder Traggestell ausgebildet ist;
- die Tragvorrichtung als Rucksack ausgebildet ist;
- zwei Gurte (6) vorgesehen sind, zum Tragen der Tragvorrichtung über beiden Schultern eines Benutzers;
- die Umformereinrichtung (4) ein mit dem Energiespeicher (2) elektrisch verbundener Frequenzumformer zum Wandeln eines von dem Energiespeicher bezogenen elektrischen Gleichstroms in einen Wechselstrom ist;
- die Anschlusseinrichtung (5) als Steckdose oder Anschlussbuchse ausgebildet ist;
- der Energiespeicher (2) wechselbar an dem Tragrahmen (1) befestigt ist;
- eine Aufnahme (3) für den Energiespeicher (2) vorgesehen ist, zum Befestigen des Energiespeichers (2) an dem Tragrahmen (1);
- der Energiespeicher (2) wechselbar in die Aufnahme (3) einsteckbar ist;
- der Energiespeicher (2) durch eine Verriegelungseinrichtung in der Aufnahme (3) gehalten wird; und wobei
- die Umformereinrichtung (4) unterhalb von dem Energiespeicher (2) und der Aufnahme (3) angeordnet ist.

2. Tragvorrichtung nach Anspruch 1, wobei der Energiespeicher (2) und die Umformereinrichtung (4) eine bauliche Einheit (9) bilden und gemeinsam wechselbar an dem Tragrahmen (1) befestigt sind.

3. Tragvorrichtung nach einem der vorstehenden Ansprüche, wobei ein mit dem Tragrahmen (1) verbundener Hüftgurt (8) vorgesehen ist.

4. Tragvorrichtung nach einem der vorstehenden Ansprüche, wobei eine von dem Tragrahmen (1) getragene Schalteinrichtung vorgesehen ist, zum Schalten einer elektrischen Verbindung zwischen dem Energiespeicher (2) und der Umformereinrichtung (4).

5. Tragvorrichtung nach Anspruch 4, wobei
- an der Anschlusseinrichtung (5) eine Detektionseinrichtung vorgesehen ist, zum Erkennen, dass ein Verbraucher angeschlossen ist; und wobei
- die Detektionseinrichtung mit der Schalteinrichtung gekoppelt ist, derart, dass die Schalteinrichtung nur dann schließbar ist, wenn ein an der Anschlusseinrichtung (5) angeschlossener Verbraucher erkannt wird.

6. Tragvorrichtung nach einem der Ansprüche 4 oder 5, wobei die Schalteinrichtung automatisch schließbar ist, wenn ein an der Anschlusseinrichtung (5) angeschlossener Verbraucher erkannt wird.

7. Tragvorrichtung nach einem der vorstehenden Ansprüche, wobei von dem Tragrahmen (1) wenigstens eine der folgenden weiteren Komponenten getragen wird:
- Ladeeinrichtung für den Energiespeicher
- Photovoltaik-Einrichtung zum Laden des Energiespeichers
- Heizeinrichtung zum Bereitstellen von Wärme
- Kühleinrichtung zum Bereitstellen von Kälte
- Beleuchtungseinrichtung
- Kleinspannungs-Anschlussvorrichtung.

## Claims

1. Carrying device comprising
- a carrying frame (1);
- an energy store (2) which is carried by the carrying frame (1);
- a converter device (4), which is carried by the carrying frame (1), for converting an electric current drawn from the energy store (2); and comprising
- an electrical connection device (5), which is carried by the carrying frame (1), for connecting a consumer;
wherein:
- the carrying frame (1) is designed as a carrying plate or carrying rack;
- the carrying device is designed as a rucksack;
- two straps (6) are provided for carrying the carrying device over the two shoulders of a user;
- the converter device (4) is a frequency converter, which is electrically connected to the energy store (2), for converting an electric direct current drawn from the energy store into an alternating current;
- the connection device (5) is designed as a plug socket or connection socket;
- the energy store (2) is fastened to the carrying frame (1) in an exchangeable manner;
- a receiver (3) for the energy store (2) is provided for fastening the energy store (2) to the carrying frame (1);
- the energy store (2) can be inserted into the receiver (3) in an exchangeable manner;
- the energy store (2) is held in the receiver (3) by a locking device; and wherein
- the converter device (4) is arranged underneath the energy store (2) and the receiver (3).

2. Carrying device as claimed in claim 1, wherein the energy store (2) and the converter device (4) form a structural unit (9) and together are fastened to the carrying frame (1) in an exchangeable manner.

3. Carrying device as claimed in any one of the preceding claims, wherein a waist strap (8) which is connected to the carrying frame (1) is provided.

4. Carrying device as claimed in any one of the preceding claims, wherein a switching device which is carried by the carrying frame (1) is provided for switching an electrical connection between the energy store (2) and the converter device (4).

5. Carrying device as claimed in claim 4, wherein
- a detection device is provided on the connection device (5) for detecting that a consumer is connected; and wherein
- the detection device is coupled to the switching device such that the switching device can be closed only when a consumer connected to the connection device (5) is detected.

6. Carrying device as claimed in any one of claims 4 or 5, wherein the switching device can be automatically closed if a consumer connected to the connection device (5) is detected.

7. Carrying device as claimed in any one of the preceding claims, wherein at least one of the following further components is carried by the carrying frame (1):
- charging device for the energy store,
- photovoltaic device for charging the energy store,
- heating device for providing heat,
- cooling device for providing a cooling effect,
- lighting device,
- low-voltage connection device.

## Revendications

1. Dispositif de transport avec
- un châssis de transport (1) ;
- un accumulateur d'énergie (2) supporté par le châssis de transport (1) ;
- un dispositif transducteur (4) supporté par le châssis de transport (1), pour la transduction d'un courant électrique prélevé dans l'accumulateur d'énergie (2) ; et avec
- un dispositif de raccordement électrique (5) supporté par le châssis de transport (1), pour le raccordement d'un consommateur ;
dans lequel
- le châssis de transport (1) est conçu comme une plaque de transport ou un bâti de transport ;
- le dispositif de transport est conçu comme un sac à dos ;
- deux sangles (6) sont prévues pour le transport du dispositif de transport sur les deux épaules d'un utilisateur ;
- le dispositif transducteur (4) est un transducteur de fréquence relié électriquement avec l'accumulateur d'énergie (2) pour la conversion d'un courant continu prélevé dans l'accumulateur d'énergie en un courant alternatif ;
- le dispositif de raccordement (5) est conçu comme une prise femelle ou une douille de raccordement ;
- l'accumulateur d'énergie (2) est fixé de manière amovible au châssis de transport (1) ;
- un logement (3) pour l'accumulateur d'énergie (2) est prévu afin de fixer l'accumulateur d'énergie (2) au châssis de transport (1) ;
- l'accumulateur d'énergie (2) peut être enfiché de manière amovible dans le logement (3) ;
- l'accumulateur d'énergie (2) est maintenu dans le logement (3) par un dispositif de verrouillage ; et dans lequel
- le dispositif transducteur (4) est disposé en dessous de l'accumulateur d'énergie (2) et du logement (3).

2. Dispositif de transport selon la revendication 1, dans lequel l'accumulateur d'énergie (2) et le dispositif transducteur (4) forment une unité (9) et sont fixés ensemble de manière amovible au châssis de transport (1).

3. Dispositif de transport selon l'une des revendications précédentes, dans lequel une sangle de hanche (8), reliée avec le châssis de transport (1), est prévue.

4. Dispositif de transport selon l'une des revendications précédentes, dans lequel un dispositif de commutation supporté par le châssis de transport (1) est prévu, pour la commutation d'un raccordement électrique entre l'accumulateur d'énergie (2) et le dispositif transducteur (4).

5. Dispositif de transport selon la revendication 4, dans lequel
- sur le dispositif de raccordement (5), est prévu un dispositif de détection afin de détecter le raccordement d'un consommateur ; et dans lequel
- le dispositif de détection est couplé avec le dispositif de commutation de façon à ce que le dispositif de commutation ne puisse être fermé que lorsque d'un consommateur raccordé au dispositif de raccordement (5) est détecté.

6. Dispositif de transport selon l'une des revendications 4 ou 5, dans lequel le dispositif de commutation peut être fermé automatiquement lorsqu'un consommateur raccordé au dispositif de raccordement (5) est détecté.

7. Dispositif de transport selon l'une des revendications précédentes, dans lequel le châssis de transport (1) supporte au moins un des autres composants suivants :
- dispositif de charge pour l'accumulateur d'énergie
- dispositif photovoltaïque pour la charge de l'accumulateur d'énergie
- dispositif de chauffage pour la production de chaleur
- dispositif de refroidissement pour la production de froid
- dispositif d'éclairage
- dispositif de raccordement basse tension.
